# EUROPEAN PATENT APPLICATION

(11) **EP 2 354 916 A2**
(43) Date of publication of application: **10.08.2011**
(21) Application number: 11152815.4
(22) Date of filing: 31.01.2011
(51) Int. Cl.: G06F 3/048, H04N 5/445

(54) **Electronic device and method for providing graphical user interface (GUI)**

(30) Priority: 05.02.2010 KR 20100011233
(71) Applicant: LG ELECTRONICS INC., Yeongdeungpo-gu Seoul 150-721 (KR)
(72) Inventor: Kwon, Oh Kab, Gyeonggi-do 451-731 (KR); Cho, Yong Bum, Gyeonggi-do 451-731 (KR)
(74) Representative: Cabinet Plasseraud

(57) **Abstract**

An electronic device and a method for providing a Graphical User Interface (GUI) are disclosed. The electronic device includes a storage configured to store a first set of pixel data and a second set of pixel data, a controller configured to detect a request for providing a Graphical User Interface (GUI) for recording reservation and access the first set of pixel data and the second set of pixel data in response to detecting the request and a formatter configured to convert format of the first set of pixel data and the second set of pixel data to output 3D format.

## Description

### BACKGROUND OF THE DISCLOSURE

### Field of the Disclosure

The present invention relates to an electronic device and a method for providing Graphical User Interface (GUI).

### Discussion of the Related Art

Currently, broadcasting environments have drastic change from analog to digital. Together with that, broadcasting contents for digital broadcasting have been increasing in comparison to contents for analog broadcasting and the kinds of the digital broadcasting contents have been diversified. Especially, interest in 3-dimentional (3D) contents have been increasing more and more than 2-dimentional contents and the 3D contents have been produced more, because the 3D contents can provide realism and cubic-stereoscopic effect. As a result, quite a variety of studies has been under progress to enable such the 3D contents viewed in general households.

Not only 3D contents but also electronic devices have been performing most functions of electronic appliances and under development to be compatible with corresponding electronic appliances, as digital conversions.

However, a passive reservation calendar display GUI of a conventional electronic device provides a simple interface which fails to generate a user's interest and to be intuitive.

Moreover, according to the conventional 2D passive reservation calendar display GUI, complexity is increased in case of enlarged items. Because of that desired information fails to be provided and many processes are required to provide the desired information. As a result, the conventional 2D passive reservation calendar display GUI is not a user friendly GUI and it has a disadvantage of user confusion and another disadvantage of deteriorated user convenience.

If considering a recent trend and GUI configuration limitations within a broadcasting receiver, the conventional 2D passive reservation calendar display GUI could deteriorate user purchase desire or sell causing effect.

### SUMMARY OF THE DISCLOSURE

Accordingly, the present invention is directed to an electronic device and a method for providing Graphical User Interface (GUI) that substantially obviate one or more problems due to limitations and disadvantages of the related art.

An object of the present invention is to provide an electronic device having passive reservation calendar display GUI configured to allow a user to use conveniently and user-friendly, and a method for providing the GUI.

Additional advantages, objects, and features of the disclosure will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a method for providing a Graphical User Interface (GUI) comprises detecting a request for providing a Graphical User Interface (GUI) for recording reservation, accessing from a storage a first set of pixel data and a second set of pixel data in response to detecting the request, wherein the first set of pixel data and the second set of pixel data display the GUI including a calendar, wherein at least one date cell of the calendar includes a stereoscopic image indicating recording reservation information and converting format of the first set of pixel data and the second set of pixel data to output 3D format. Herein, the stereoscopic image may be differently displayed according to the recording reservation. Also, the stereoscopic image may include one or more layer according to the reservation information, each layer being associated with one program.

The GUI may be displayed as a stereoscopic image including the calendar on at least one face of a polyhedron.

The method further comprises detecting a user action selecting one date cell of the calendar, and forming a third set of pixel data for displaying a detail recording reservation list associated with the selected date cell in response to detecting the user action. Herein, the detail recording reservation list may include at least one of title, time information or thumb nail.

In another aspect of the present invention, a method for providing a Graphical User Interface (GUI) comprises detecting a request for providing a Graphical User Interface (GUI) for recording reservation, accessing from a storage a first set of pixel data and a second set of pixel data in response to detecting the first request, wherein the first set of pixel data and the second set of pixel data display the GUI as a stereoscopic image including a calendar on at least one face of a polyhedron, and converting format of the first set of pixel data and the second set of pixel data to output 3D format.

The method further comprises modifying the accessed first set of pixel data and the accessed second set of pixel data according at least one of size information, depth information or location information. Herein, at least one date cell of the calendar includes a stereoscopic image indicating recording reservation information.

Date cells of the calendar may be differently displayed according to the recording reservation. Herein, at least one of color or thickness of the date cells may be differently display.

The method further comprises detecting a user action selecting one date cell of the calendar, and forming a third set of pixel data for displaying a detail recording reservation list associated with the selected date cell in response to detecting the user action. Herein, the detail recording reservation list includes at least one of title, time information or thumb nail.

In another aspect of the present invention, An electronic device comprises a storage configured to store a first set of pixel data and a second set of pixel data, a controller configured to detect a request for providing a Graphical User Interface (GUI) for recording reservation and access the first set of pixel data and the second set of pixel data in response to detecting the request, wherein the first set of pixel data and the second set of pixel data display the GUI including a calendar, wherein at least one date cell of the calendar includes a stereoscopic image indicating recording reservation information, and a formatter configured to convert format of the first set of pixel data and the second set of pixel data to output 3D format. Herein, the stereoscopic image may be differently displayed according to the recording reservation. Also, the stereoscopic image may include one or more layer according to the reservation information, each layer being associated with one program.

The controller may modify the accessed first set of pixel data and the accessed second set of pixel data according at least one of size information, depth information or location information.

The GUI may be displayed as a stereoscopic image including the calendar on at least one face of a polyhedron.

Color of date cells of the calendar may be differently displayed according to the recording reservation.

The controller may detect a user action selecting one date cell of the calendar and forms a third set of pixel data for displaying a detail recording reservation list associated with the selected date cell in response to detecting the user action. Herein, the detail recording reservation list includes at least one of title, time information or thumb nail.

According to the electronic device of the present invention, 3D GUI is provided in consideration of the user's view and the user's interest in and purchasing desire of usage of the 3D GUI may be enhanced. As a result, competition of device using the same may be improved and sell generation may be maximized.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure.

In the drawings:

FIG. 1 is a block view illustrating a configuration of an electronic device according to an exemplary embodiment of the present invention;

FIG. 2 is a diagram illustrating perspective according to an interval or time difference (hereinafter, interval) between left image data and right image data;

FIG. 3A and 3B are a diagram illustrating a method for implementing 3D GUI according to an embodiment, related to the present invention;

FIGS. 4 to 7 are diagrams illustrating GUI provided by the electronic device according to a first embodiment;

FIG. 8A to 8D are a diagram illustrating a recording reservation list according to a first embodiment;

FIG. 9A to 9C are a diagram illustrating a detailed recording reservation list according to a first embodiment;

FIG. 10A to 10C are a diagram illustrating a detailed recording reservation list according to a second embodiment;

FIG. 11 is a diagram illustrating a recording reservation list according to a second embodiment;

FIG. 12A and 12B are a diagram illustrating a recording reservation list according to a third embodiment;

FIG. 13A and 13B are a diagram illustrating a recording reservation list according to a fourth embodiment;

FIG. 14 is a diagram illustrating a detailed recording reservation list according to a third embodiment;

FIG. 15A to 15C are a diagram illustrating a recording reservation list according to a fifth embodiment;

FIG. 16A to 16C are a diagram illustrating a recording reservation list according to sixth embodiment;

FIG. 17A to 17C are a diagram illustrating a recording reservation list according to a seventh embodiment;

FIG. 18 is a diagram illustrating GUI according to a second embodiment, which is provided by the electronic embodiment of the present invention;

FIG. 19 is a diagram illustrating GUI according to a third embodiment, which is provided by the electronic embodiment of the present invention;

FIG. 20 is a flowchart illustrating a process of a method for providing GUI according to an exemplary embodiment of the present invention.

### DESCRIPTION OF SPECIFIC EMBODIMENT

Reference will now be made in detail to the specific embodiments of the present invention, examples of which are illustrated in the accompanying drawings. Wherever possible, the same reference numbers will be used throughout the drawings to refer to the same or like parts.

In addition, although the terms used in the present invention are selected from generally known and used terms, some of the terms mentioned in the description of the present invention have been selected by the applicant at his or her discretion, the detailed meanings of which are described in relevant parts of the description herein. Furthermore, it is required that the present invention is understood, not simply by the actual terms used but by the meanings of each term lying within.

The present invention discloses en electronic device and a method for providing Graphical User Interface (GUI) and it will be described specifically in reference to the accompanying drawings as follows.

As a result, the present invention is to provide 3D-format GUI configured to provide a passive reservation calendar display GUI and to implement a variety of auxiliary functions related to the passive reservation calendar display GUI, to control it easily, simply and precisely.

As follows, to help a technical subject matter of the present invention understood and explained efficiently, the electronic device may provide a 3-dimentional (hereinafter, 3D) motion picture or image and 3D typed GUI. Also, the GUI may be exemplified as passive reservation calendar display GUI. Related to the GUI, corresponding information may be stored in an electronic device set to be used or such corresponding information may be received from an external server or a homepage of each product company connected after connected there with via network, to be displayed on a screen of a receiver.

[ELECTRONIC DEVICE]

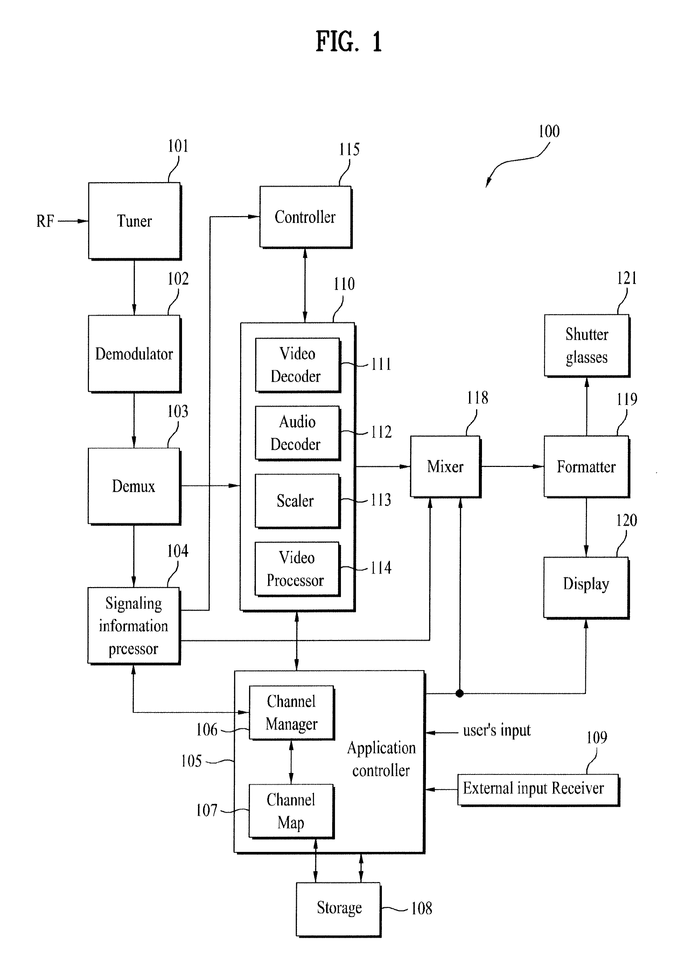

FIG. 1 is a block view illustrating an electronic device according to an exemplary embodiment of the present invention.

In reference to FIG. 1, an electronic device according to this embodiment of the present invention includes a tuner 101, a demodulator 102, a demultiplexer 103 (Demux), a signaling information processor 144, an application controller 105, a storage 108, an external input receiver 109, a decoder/scaler 110, a controller 115, mixer 118, a formatter 119 and a display 120. Here, the electronic device 100 may be a personal computer system such as a desktop, laptop, tablet and handheld computer. The electronic deice 100 may be a mobile terminal such as a mobile phone, smart phone, digital broadcasting terminal, Personal Digital Assistants (PDA), Portable Multimedia Player (PMP), navigation and the like or a fixed-type electric appliance such as a digital TV and the like.

The electronic device 100 may a different configuration, rather than the configuration shown in FIG. 1. For example, the electronic device 100 may receive packets received from a network and it may further include a network interface configured to transmit the packets. In other words, the electronic device 100 receive IP packets which transmits audio/video data, signaling information and data configured to display GUI, from a service provider via the network interface. For example, the signaling information may be Program Specific Information/Program and System Information Protocol (PSI/PSIP) and Digital Video Broadcasting-service Information (DVB-SI). Also, the electronic device 100 may be embodied as set-top box with no display 120. In this case, the electronic device 100 may output a control signal to display images to an independent display device 120.

The tuner 101 tunes a channel according to control of a channel manager 106 and it receives a digital broadcasting signal.

The demodulator 102 demodulates the broadcasting signal according to demodulation method corresponding to a modulation method of the broadcasting signal.

The demultiplexer 103 demultiplexes audio/video data and signaling information from the demodulated broadcasting signal. Here, the demultiplexing may be implemented via filtering of Packet Identifier (PID). The demultiplexer 103 outputs the demultiplexed audio data/video data to the decoder/scaler 110 and the demultiplexed signaling information to the signaling information processor 104.

The signaling information processor 104 processes the demultiplexed signaling information and it outputs the processed information to the application controller 105, the controller 115 and the mixer 118. Here, the signaling information processor may include a database (not shown) storing the processed signaling information therein. The signaling information may include type information configured to represent whether the video data of the broadcasting signal is a 2D image o 3D image. Because of that, the signaling information processor 104 determines whether the received video data from the type information is a 3D image and it transmits the result of the determination to the controller 115 or the type information to the controller 115 to allow the controller 115 to determine that. If there is no type information in the signaling information, the signaling information processor 104 may report only the result to the controller 115.

The application controller 105 includes the channel manager 106 and a channel map 107, such that it may receive a user's request via the external input receiver 109 to control the user's request to be processed properly. Here, the application controller 105 may include an OSD data generator (not shown). Then, the application controller 105 may access and transmit OSD data or GUI data stored in the storage 118 to the controller 115 or it may configurate GUI based on the accessed OSD data or GUI data. The channel manager 106 forms and manage a map 107 based on information related to a channel inside the signaling information. Also, the channel manager 106 may allow channel conversion or provide information for configurating broadcasting guide based on the channel map 107 according to a user request output from the application controller 105.

The decoder/scaler 110 includes a video decoder 111, an audio decoder 112, a scaler 114 and a video processor 114.

The video/audio decoders 111 and 112 decode the demultiplexed video/audio data.

The scaler 1113 scales the video/audio data processed by the video/audio decoders 111 and 112 into signals sized properly with respect to output format.

The video processor 114 video-signal-processes the video data decoded by the video decoder 111 or determines a type of the input data according to the control signal of the controller 115. The video processor 114 may determine a type of video data if no type information exists in the above signaling information or if it cannot determine any type of the input video data from the type information on its own.

The controller 115 controls the decoder/scaler 110 to process corresponding video data properly based on the type of the video data determined by the video processor 114 or the type information inputted by the signaling information processor 104. The controller 115 may access the stored OSD data or GUI data and it may configurate GUI. Alternatively, the controller 115 may use the OSD data or GUI data transmitted by the application controller 105. Rather than that, the controller 115 may perform control for an overall system.

The application controller 105 senses the user action. Here, the user action may include physical selection for a button of the electronic device or a remote control, implementation of a predetermined gesture on a touch screen display, selection for a soft button and implementation of a predetermined gesture recognized from an image photographed by a photographing device and implementation of a predetermined voice recognized by voice recognition. The external input receiver 109 may receive a signal for the user action for the physical button selection of the remote control. Here, the user action of the key input may be a user's GUI request for recording reservation related to the present invention, for example. Once sensing a user's GUI providing request, the application controller 105 may transmit the sensed GUI providing request to the controller 115 or it may confiugrate GUI for the recording reservation in response to the request. The application controller 105 may access data configured to display graphic of the GUI stored in the storage 108 and it may control the accessed data to be displayed on the display 120. In addition, the application controller 105 may convert the accessed data based on broadcasting guide information, recording reservation information, size information, depth information and location information. Here, the application controller 105 may collect the broadcasting guide information from the signaling information. The size information indicates the size of the GUI and the depth information indicates a depth value of a stereoscopic image. The location information indicates a location displaying the GUI on the screen. Here, the size information, depth information and location information may be set by the user or by the application controller 105 or controller 115.

The application controller 105 may further include a data generator (not shown) for configurating the GUI. Alternatively, the data generator may be configured of an auxiliary module independent from the application controller 105 and it may generate data related to the GUI configuration according to control of the application controller 105. Related to the present invention, the application controller 105 will be described in a usage scenario for each GUI in detail and detailed description thereof will be omitted accordingly. In addition, the function of such the application controller 105 may be performed by the controller 115 instead.

The storage 108 may store the collection of the GUI data for providing the GUI in advance. Here, the collection of the GUI data may include a first set of pixel data for a left view image and a second set of pixel data for a right-view image. In other words, the first set of the pixel data and the second set of the pixel data may display the GUI as stereoscopic image. Also, the storage 108 may store auxiliary information related to other broadcasting receivers.

The mixer 118 mixes and outputs the input of the signaling information processor 104, the decoder/scaler 110 and the application controller 105. For example, the mixer 118 mixes the GUI data with the received video data and it outputs the mixed data. The video data mixed with the GUI data displays an image having a GUI marked thereon.

The formatter 119 configurates the output of the mixer 118 to correspond to output format of a module. Here, formatter 119 may bypass a 2D image and it may process a 3D image in 3D format corresponding to format of the 3D image or an output frequency of the display according to the control of the controller 115 or the application controller 105, for example.

The display 120 displays contents and GUI.

Related to the present invention, a method for representing a 3D image may be categorized into a glass-wearing type and a non-glass type. The glass-wearing type may be categorized into a passive type and an active type. The passive type uses a polarizing filter to divide an image into a left image and a right image. A type of wearing color glasses having a blue and a red for both eyes, respectively, is corresponding to the passive type.

According to the active type, a liquid crystal shutter is used to distinguish a left from right eye and the left eye and the right eye are shut sequentially in time, to distinguish left images from right images. In other words, the active type repeats the divided screens periodically and the user views them, wearing the glasses having an electronic shutter installed therein, which is synchronized in the period to operate. The active type may be called as 'time split type' or 'shuttered glass type'. The non-glass-wearing type may include a lenticular type and a parallax barrier type. In the lenticular type, a lenticular lens plate having cylindrical lens arrays arranged thereon vertically is installed in front of an image panel. In the parallax barrier type, a barrier layer having periodic slits is provided on an image panel.

The present specification embodies a stereoscopic type out of 3D display types, specifically, an active type out of the stereoscopic types. Here, this embodiment is described, presenting shutter-glasses as medium of the active type and the present invention is not limited thereto. As described later, the present invention may be applicable to cases of using other mediums.

The formatter 119 outputs the 3D image data to the display 120 and it generates a synchronization signal (Vsync) related to the configurated 3D image data for synchronization to be suitable when viewing the output 3D image data with shutter glass 121. After that, the formatter 119 outputs the generated synchronization signal to an IR emitter (not shown) provided in the shutter glasses to allow the 3D image data to be viewable in the shutter glasses, with being suitable to the display synchronization.

The IR emitter receives the generated synchronization signal from the formatter 119 and it outputs the signal to a light receiver (not shown) of the shutter glasses 121. The shutter glasses 121 adjusts a shutter open period according to the synchronization signal received via the RI emitter (not shown) to be suitable to the synchronization of the 3D image displayed on the display 120.

As follows, a method for configurating 3D GUI will be described schematically.

The electronic device 100 processes the 3D image data by using a principle of a stereoscopic type. According to the principle of the stereoscopic type, a single object is photographed by two cameras located in different positions and right image data and left image data are generated. Each of the generated right and left image data is separated and inputted to cross human right and left eyes at right angles, respectively. After that, the image data inputted via the human right and left eyes may be combined in a human brain, to generate a 3D image. The expression of 'cross human right and left eyes at right angles' means that each of the image data will not cause interference with each other.

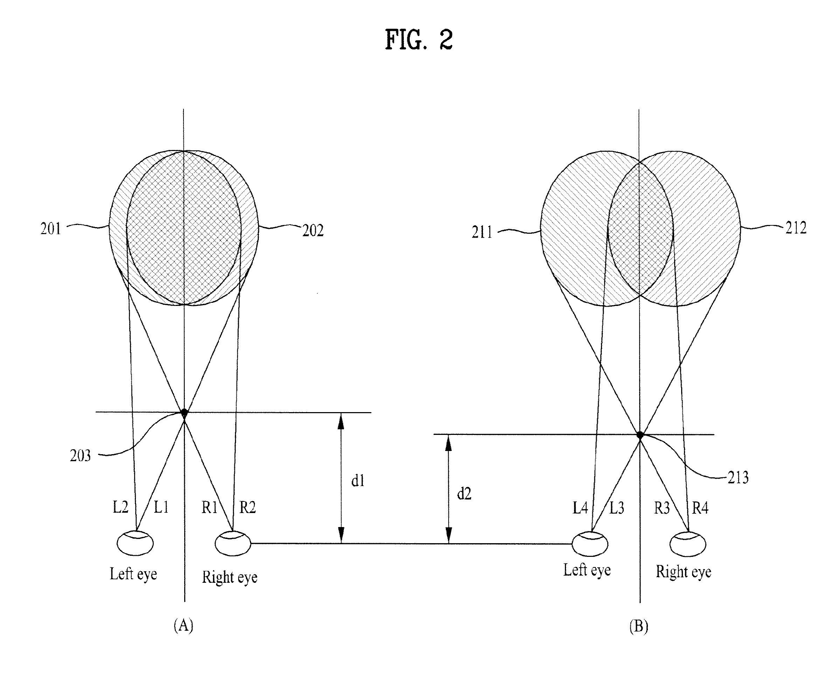

FIG. 2 is a diagram illustrating perspective according to an interval or time difference (hereinafter, 'interval') of the right and left image data.

FIG. 2 (a) illustrates a location 203 of an image formed by combination of the both data, when the internal of the right image data 201 and the left image data 202 is narrow. FIG. 2 (b) illustrates a location 213 of an image formed when the interval of right image data 211 and left image data 212 is wide.

In other words, FIGS. 2 (a) and (b) shows a level of perspective between the images formed at difference locations based on the interval of the right image data and the left image data in the image signal processing device.

In reference to FIG. 2 (a), when drawing expended lines (R1 and R2) toward a side and another side of the right image data 201 seen by a human right eye and expended lines (L1 and L2) toward a side and another side of the left image data 202 seen by the human left eye, the image is formed at the location 203 at which the expended line (R1) for the right image data crosses the expended line (L1) for the left image data in a predetermined distance (d1) apart from the right and left eyes.

In reference to FIG. 2 (b), the image is formed at the location 213 at which an expended line (R3) for the right image data crosses an expended line (13) for the left image data in a predetermined distance (d2) apart from the right and left eyes.

Here, comparing d1 shown in FIG. 2 (a) with d2 shown in FIG. 2 (b) which represents the distance to the locations 203 and 213 from the right and left eyes, d1 is farther than d2 from the right and left eyes. That is, the image of FIG. 2 (a) is formed more distant from the right and left eyes than that of FIG. 2 (b).

This is caused by the interval of the right image data and the left image data (an east-to-west direction with respect to the drawings).

For example, the interval of FIG. 2 (a) between the right image data 201 and the left image data 202 is relatively narrow, compared with the interval of FIG. 2 (b) between the right image 203 and the left image data 204.

As a result, extracting based on FIGS. 2 (a) and 2 (b), as the interval between the image data is narrower, the image formed by the combination of the right and left image data looks formed more distant from the human eyes.

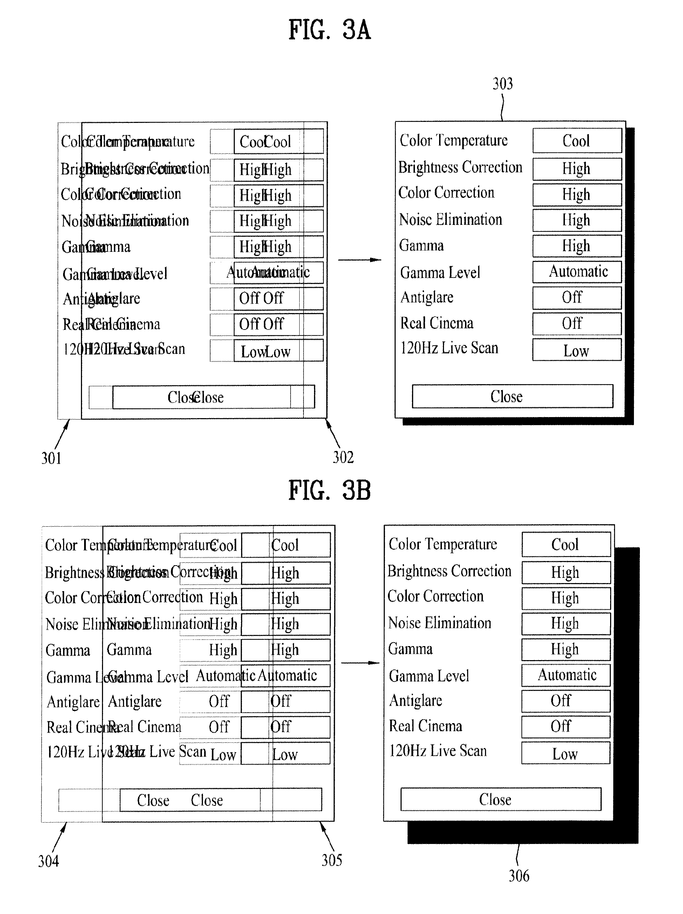

According to the above principle described above, the GUI itself provided as shown in FIGS. 3 (a) and (b) may be configured of 3D images or only predetermined items provided in the GUI may be configured of 3D images (not shown).

FIG. 3 is a diagram illustrating a method for embodying 3D GUI according to an embodiment in relation to the present invention.

FIGS. 3 (a) and 3 (b) represent GUI including a plurality of items as 3D image. In case of FIG. 3 (a), an interval between left image data 301 and right image data 302 composing GUI is narrow. In case of FIG. 3 (b), an interval between left image data 304 and right image data 305 composing GUI is wide.

As a result, according to the principle of FIG. 2, an image (303) is formed distant from the human eyes and the image (303) looks far in 3D GUI (303 and 306) represented according to the interval of each image data shown in FIGS. 3(a) and 3(b). An image (306) is formed close to the human eyes and the image (306) looks near, in other words, relatively protrusive in 3D GUI 306 represented in FIG. 3 (b). The above principle which adjusts the interval between the left and right image data composing the GUI may change a predetermined degree of depth enough to achieve a 3D effect.

The conventional electronic device adapts GUI configured to represent a calendar and the number of contents recorded on a corresponding date in 2D OSD. In this case, the conventional passive reservation calendar display allows the number of recording reservations in a corresponding month at a look, but it fails to be intuitive and to attract the user's interest because it provides a simple interface. In addition, in case of an increased number of items, complexity is increased only to give the user a sense of confusion. Because of that, the conventional passive reservation calendar display has a structure against the user's experience.

As a result, the present invention provides 3D environments and user interest/friendly interface. GUI for recording reservation configured of 3D images may be provided according to the present invention, such that competition of devices having corresponding functions may be improved.

As follows, the present specification provides GUI for useful recording reservation which can give much information to the user according to the present invention. In this case, the GUI for recording reservation according to the present invention may be configured of 3D. Because of that, the user may use more information simply without any difficulties.

For example, a calendar of a corresponding month allows a 3D mesh to be textured. In this case, a variety of calendars may be provided according to a type of mesh. For example, when a mesh is a hexahedron, six months from a current month to the next six months are textured on faces of the hexahedron, respectively, and this hexahedron is rotatable or movable freely. Because of that, various viewing environments may be provided.

Alternatively, when make recording reservation, various types of meshes may be used in a corresponding date from a calendar. For example, meshes like a several pieces of post-its are configured. When a predetermined data having corresponding post-its is selected, the corresponding post-its are arranged to give information to the user.

Alternatively, a calendar is hung on a predetermined date having recording reservation to display that the corresponding data has reserved information. Such a calendar may include information on whether or not reservation exists and time information such as dates. Such information includes contents of specific reservation information and other information. For example, in case a title is included in the reservation information, an image corresponding to a title is received via the external server or means and an image of a program corresponding to a calendar is provided together with the image.

When reservation of a plurality of programs are made on a corresponding data, the data calendar may present a multilayer structure or depth type to be selected, corresponding contents may be configured to be understood by the user easily.

If it is required to make reservation periodically, a multilayer structure according to the kind of a period may be provided. In other words, the height of a corresponding data in the calendar is adjusted. For example, in case of 'once' reservation, a preset little height may be given and in case of 'weekly' reservation, a middle height may be given and in case of 'daily' reservation, a much height may be given. Because of that, the corresponding data may be configured of a multiview image according to period setting.

Even in this case, when a plurality of programs are reserved, the multilayer structure is provided and each program may be distinguished in a different color.

As follows, embodiments of the 3D GUI may be divided one for a passive reservation calendar and one for scheduling, to make the present invention understood and explained conveniently. Here, the present invention is not limited to embodiments which will be described as follows.

[EMBODIMENT OF GUI]

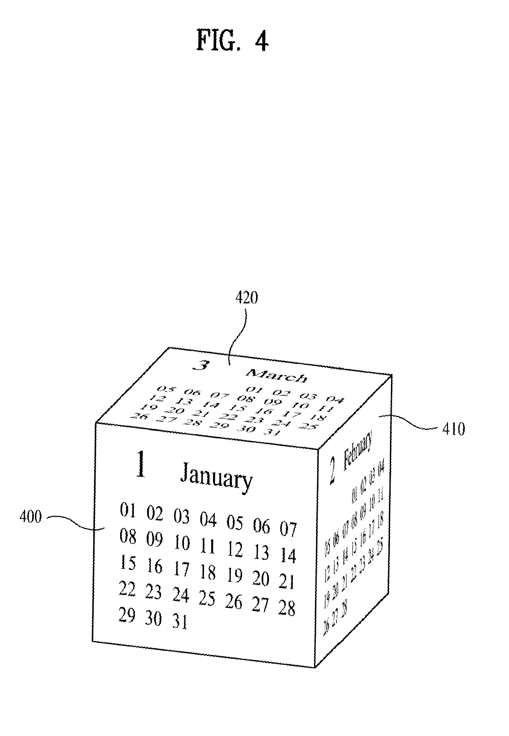

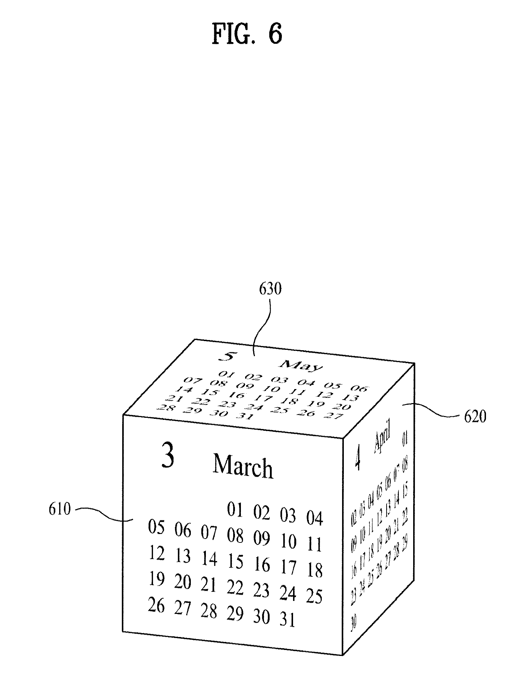

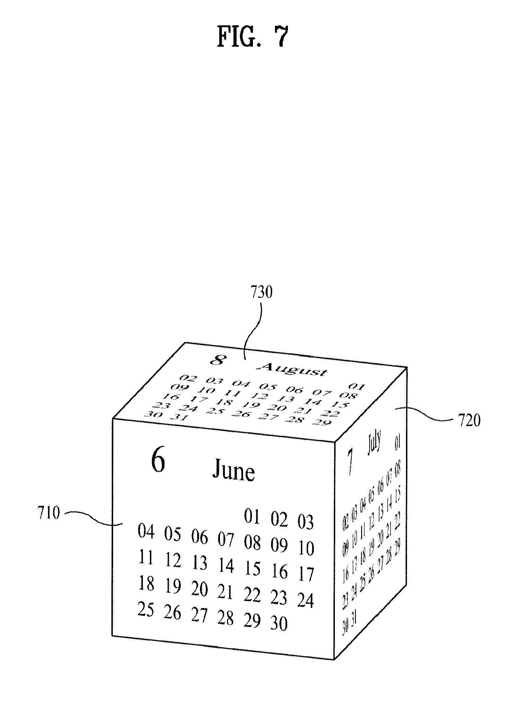

FIGS. 4 to 7 are diagrams illustrating GUI provided by the electronic device according to a first embodiment.

GUI for recording reservation according to this embodiment of the present invention is basically a polygonal 3D mesh having texture. Here, in FIGS. 4 to 7, GUI for recording reservation configured of a hexahedron to make the present invention understood and explained is embodied.

When time information, for example, GUI providing request is received from the user, the electronic device 100 configurates and provides 3D calendar GUI on a screen.

Here, each face composing the 3D calendar GUI includes texture information on data information of a specific month.

In reference to FIG. 4, a front face includes a texture 400 about *January* and the next face in a clockwise direction, in other words, a predetermined lateral face includes a texture 410 about *February.* An upper face includes a texture 420 about *March.* In this case, although not shown, neighboring two faces with respect to a predetermined face may include texture information on neighboring month with respect to data information provided by the predetermined face.

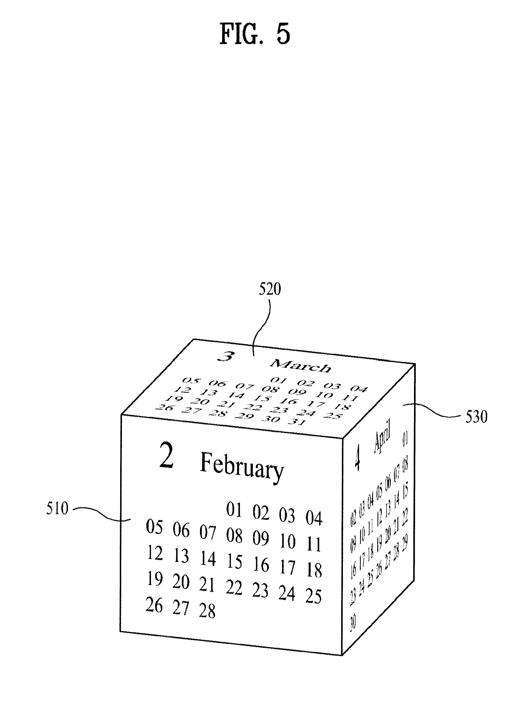

As mentioned above, the 3D calendar GUI may be controlled via input means such as a pointer, a space remote control and a motion remote control and a gesture. For example, when the user rotates the 3D calendar GUI provided as shown in FIG. 4 in a clockwise direction via the input means, a screen having the 3D calendar GUI rotated 90 degree rightwardly is provided. In other words, if the texture information about *January* is provided based on the above description in FIG. 4, the 3D calendar GUI is rotated 90 degrees rightwardly in FIG. 5 and the texture about *February* is provided.

Similarly, when the user controls a corresponding GUI downwardly via the input means in the 3D calendar GUI provided as shown in FIG. 4, a screen rotated 90 degrees upwardly, in other words, the texture information about March is provided.

When the user controls a corresponding GUI of the 3D calendar GUI upwardly via the input means, a screen rotated 90 degrees downwardly, in other words, texture information *about June* is provided. In this case, information about neighboring months with respect to the month located in front may be configured different from FIG. 4.

According to FIGS. 4 to 7 as mentioned above, the 3D calendar GUI is configured of a hexahedron and information about a year, that is, the twelve months may be neighbored to the selected month, that is, the front face of the hexahedron or information about a predetermined month provided in corresponding GUI may be converted.

Different from that, although not shown, the 3D calendar GUI may be configured of a dodecahedron corresponding to the twelve months composing a year and the dodecahedron GUI is rotated in a clockwise and counter-clockwise direction to allow the user to access.

At this time, the dodecahedron 3D calendar GUI provides only information about a month. When a specific month is selected, GUI for detailed information about the selected month is configured of a multiview image with a multi-step structure or a layer structure to look protrusive from the screen.

As mentioned above, the calendar information is configured of 3D, not 2D, polygonal mesh and the user may control the calendar information more easily and simply, together with a visual effect, and he or she may have access convenience.

Next, a method for configurating and providing information on the scheduling as 3D GUI will be described. Here, the providing of the information on the scheduling may start from the 3D calendar GUI shown in FIGS. 4 to 7.

For example, when sensing the user action configured to select a specific month from the 3D calendar GUI shown in FIGS. 4 to 7, the electronic device 100 may output a recording reservation list about the selected month.

In this case, let us assume that the recording reservation list be provided in the data information of the selected month, for example.

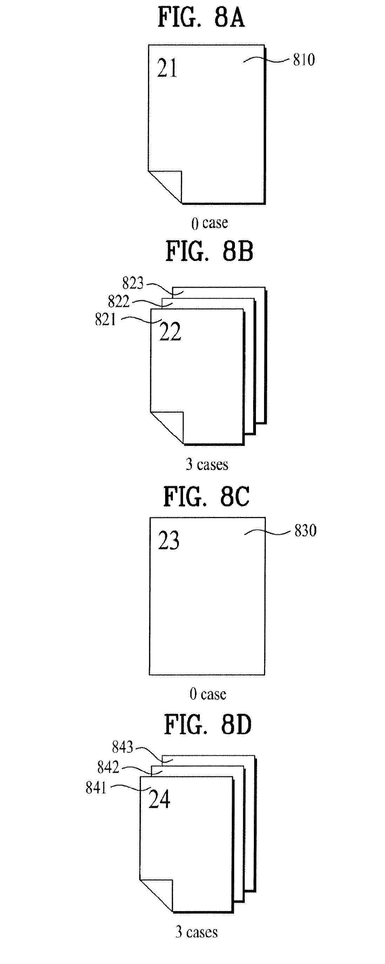

In this case, it is assumed that information for each date can be provided as shown in FIG. 8, for example.

FIG. 8 is a diagram illustrating a recording reservation list according to a first embodiment.

FIG. 8 is a diagram illustrating a method for providing reservation list information for each date of a specific month. For example, it is assumed that the user select *January* in the first embodiment described above. In this case, the texture information of January is provided and the texture information includes reservation list information on *January 21* to *24* shown in FIGS. 8(a) to 8 (d), respectively.

In case of FIGS. 8(a) and 8(c), information of a texture 810 for January 21 and a texture 830 for *January 23* presents that there is no recording reserved program on the corresponding dates. However, FIGS. 8(b) and 8(d) presents there are three recording reserved programs in a texture 820 for *January 22* and a texture 840 for *January 24,* respectively.

As shown in FIG. 8, when a plurality of recording reserved programs are provided in a corresponding date according to providing the date information, GUI may be configured of a multilayered structure with layers as many as the number of the programs. That is, when FIGS. 8(b) and 8(d) present the recording reservation list including the information on three recording reserved programs, the texture may be configured of three layers.

When there is a recording reserved program on a specific date according to FIG. 8, the multilayer structure with predetermined layers as many as the number of programs is configured and at this time, detailed information for each program is not provided.

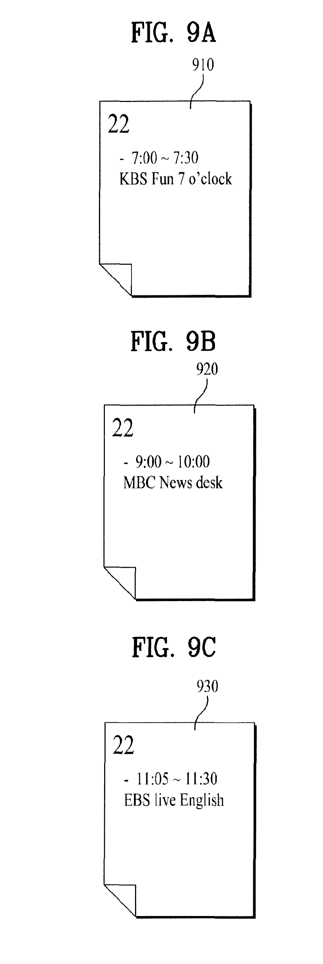

FIG. 9 is a diagram illustrating a detailed recording reservation list according to a first embodiment.

According to FIG. 9, when the user selects FIG. 8 (b), in other words, a texture for January 22 821 to 823, a method for providing each of the information provided in the texture for the corresponding date.

As a result, in this case, FIG. 9 may be provided instead of the GUI provided in FIG. 8 or it may be continuously provided after a predetermined face of a corresponding date shown in FIG. 8. Then, the GUI provided in FIGS. 8 and 9 may be configured to have tilt and each GUI may have a different tilt level.

As mentioned above, FIGS. 9(a) to 9(c) present a detailed recording reservation list of FIG. 8(b) which displays detailed information about a program having recording reservation on January 22.

Especially, FIGS. 9(a) to 9(c) may be neighboring to each other sequentially in chronological order and each GUI 910 to 930 may be outputted together with information on the recording reserved program.

In chronological order, a broadcasting program 'KBS Fun 7 o'clock' which will be broadcasted from 7:00 PM to 7:30 PM on January 22 is recording-reserved in FIG. 9(a) and a broadcasting program 'MBC news desk' which will be broadcasted from 9:00 PM to 10:00 PM on January 22 is recording-reserved in FIG. 9(b) and a broadcasting program 'EBS Living English' which will be broadcasted from 11:05 PM to 11:30 PM on January 22 is recording-reserved in FIG. 9(c).

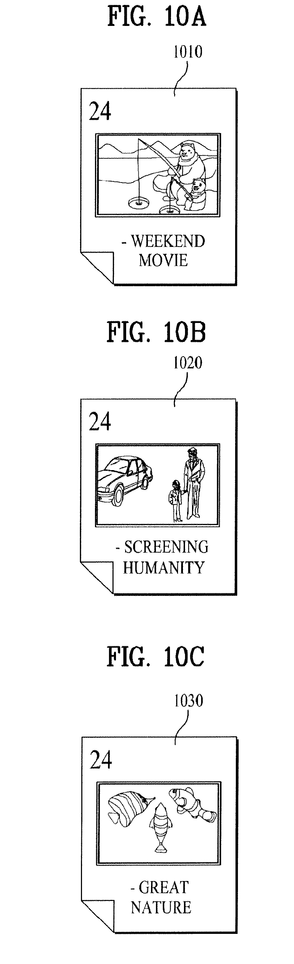

FIG. 10 is a diagram illustrating a detailed recording reservation list according to a second embodiment.

For example, FIG. 10 may be another embodiment of FIG. 9. In other words, FIG. 9 provides only the text information on the recording reserved program when providing the detailed recording reservation list for the selected date of FIG. 8. In contrast, FIG. 10 provides a thumbnail image together with the texture information according to another embodiment.

For example, FIG. 10 presents a method for providing a detailed recording reservation list of a corresponding date when the texture 840 for January 24 is selected by the user.

FIGS. 10(a) to 10(c) present that broadcasting programs 'Weekend Movie' 1010, 'Screening Humanity' 1020 and 'Great Nature' 1030 are recording-reserved in a recording reservation list on January 24. in this case, the electronic device 100 may provide information for each broadcasting program according to the recording list as mentioned above and text information and a thumbnail image for the title 'Weekend Movie' may be provided together. The thumbnail image may be a logo for a corresponding broadcasting program of or one of thumbnail images collected in relation to the corresponding broadcasting program from the corresponding broadcasting company or another server.

According to FIGS. 9 and 10, the detailed information on specific information is provided and related information or additional information is provided. Here, FIG. 9 presents that the related information or additional information includes time information and title information and FIG. 10 presents that it includes a thumbnail image together with the title information. Rather than them, according to the present invention, the related information and additional information of the GUI provided in FIGS. 9 and 10 may be combined with each other and other broadcasting link information, related program or channel information, detailed information, broadcasting company information and cast information of a corresponding program may be combined with each other. After that, information on the GUI or on whether or not corresponding information exists may be provided and an auxiliary GUI in case of the user's request may be provided.

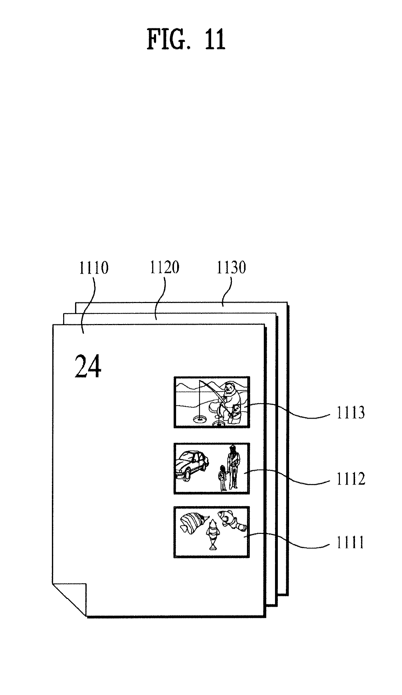

FIG. 11 is a diagram illustrating a recording reservation list according to a second embodiment.

FIG. 11 is a conversion type of FIG. 8(d).

In other words, FIG. 11 presents texture information 1110 to 1130 for January 24. Here, as there are three recording reserved programs on January 24, GUI is configured of three layers as shown in FIG. 8(d). Here, thumbnail images 1111 to 1113 of the recording reserved programs are seen on a top layer 1110 at a look.

At this time, each of the layers may be configured to have a single thumbnail image according to an embodiment. In this case, the earliest recording reserved program on a corresponding date may be provided on the top layer and the latest recording reserved program may be provided on the bottom layer. Each of the layers may include a single thumbnail image of the corresponding image.

If the user selects a corresponding GUI in FIG. 11, the electronic device may provide the type of detailed information shown in FIGG. 9 and 10, for example.

Alternatively, when one of the thumbnail images provided on the top layer is selected, only information related to a corresponding thumbnail image may be provided.

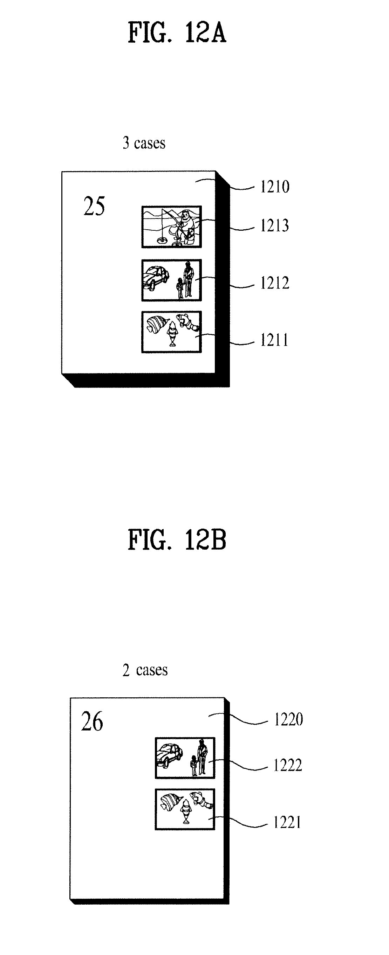

FIG. 12 is a diagram illustrating a recording reservation list according to a third embodiment.

Different from the multilayer structure according to the above embodiment of FIG. 12, the depth is given differently according to the number of programs recording-reserved on a corresponding date and change of the thickness allows the number of the recording reserved programs to be determined.

For example, it is assumed that texture information 1210 for January 25 includes three recording reserved programs in case of FIG. 12(a) and that texture information 1220 for January 26 includes two recording reservation programs in case of FIG. 12(b).

In reference to FIGS. 12(a) and 12(b), more depth is given to the texture 1210 for January 25 having three recording reserved programs than the texture 1220 for January 24 having two recording reserved programs. Because of that, the texture 1210 may be configured of a multiview image to look more protrusive on the screen.

FIG. 12 may further include number information and information on a thumbnail image of a corresponding program, together with the depth determined according to the number of the recording reserved program for each date.

When the user selects FIGS. 12(a) and 12(b), the electronic device 100 may form and provide the detailed recording reservation list as shown in FIGS. 9 and 10, for example.

Alternatively, when the user selects one of the provided thumbnail images, the electronic device 100 may provide information related only to a corresponding thumbnail image.

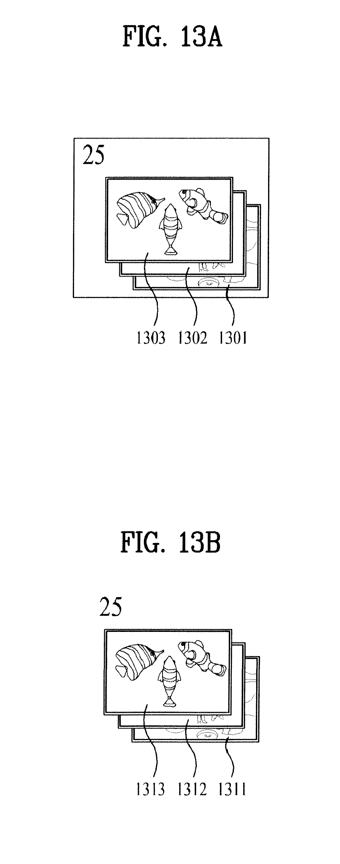

FIG. 13 is a diagram illustrating a recording reservation list according to a fourth embodiment.

According to FIG. 13, not the corresponding date list itself but a thumbnail image which will be provided in the corresponding data list is configured of a multi-layer structure. Here, a recording reservation list of FIG. 13(a) includes an outline of a date list. When there are three recording reserved programs on a corresponding date, a thumbnail image multilayer structure includes three layers 1301 to 1303 and a recording reservation list of FIG. 13(b) includes a thumbnail image multilayer structure 1311 to 1313 provided below number information presenting dates, without outline of the date list.

When the user selects FIGS. 13(a) and 13(b), the electronic device 100 may form the detailed recording reservation list as shown in FIGS. 9 and 10.

Alternatively, when the user selects one of the provided thumbnail images, the electronic device 100 may provide information related only to a corresponding thumbnail image.

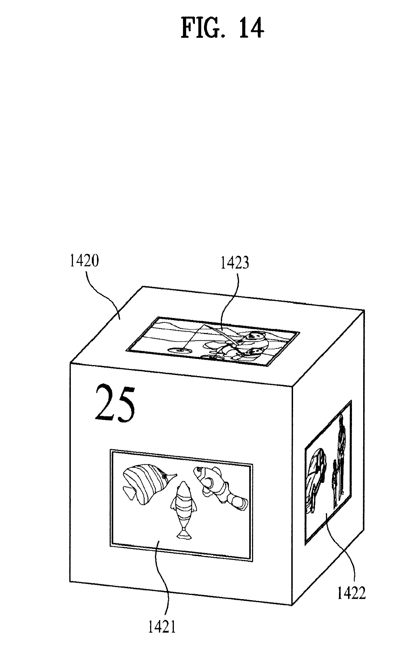

FIG. 14 is a diagram illustrating a detailed recording reservation list according to a third embodiment.

FIG. 14 presents that a corresponding date list is configured of a polyhedron 1420 when a corresponding date list has a plurality of recording reserved programs.

According to FIG. 14, when three recording-reserved programs for January 25, a list 1420 for January 25 is configured of hexahedron and detailed information for each of the programs or each of thumbnail images 1421 to 1423 is arranged on each of faces.

Alternatively, each face of polygonal GUI has date information. When there is a plurality of recording reserved programs for each face, that is, each date, the face may have a multilayer structure like the above embodiment. After that, only recording reservation list selected by the user may be provided or the detailed recording reservation list may be provided as shown in FIGS. 9 and 10.

As mentioned above, a polyhedron having faces as many as the number of dates in a corresponding month is provided, for example, a polygonal having 31 faces for January and a multilayer structure or texture information may be provided according to the number of recording reserved programs.

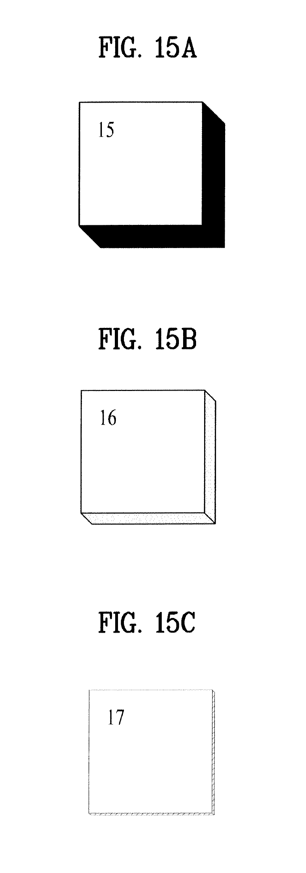

FIG. 15 is a diagram illustrating a recording reservation list according to a fifth embodiment.

FIG. 15 is a conversion type of GUI with respect to FIG. 12.

That is, according to FIG. 15, a texture for each date has predetermined depth and color according to the number of recording reserved programs for each date.

Alternatively, FIG. 12 may be configured to have colors.

As a result, when there are three recording reserved programs, a red color is given to a predetermined depth according to the three programs and a texture for a corresponding date in FIG. 15(a). When there are two recording reserved programs, a green color is given to a predetermined depth according to the two programs and a texture for a corresponding date in FIG. 15(b). When there are single recording reserved program, a green color is given to a predetermined depth according to the single program and a texture for a corresponding date in FIG. 15(c). When there is no recording reserved program, a texture for a date with no recording reserved program has a white color distinguishably.

Here, when the user selects one of FIGS. 15(a), 15(b) and 15(c), the electronic device 100 may form the detailed recording reservation list as shown in FIGS. 9 and 10, for example.

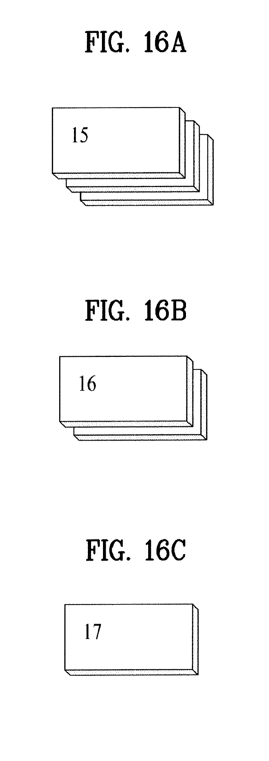

FIG. 16 is a diagram illustrating a recording reservation list according to a sixth embodiment.

FIG. 16 presents a conversion type of FIG. 15 which is an embodiment similar to the embodiment of FIG. 12. In this case, the electronic device 100 is configured to display the number of programs on a recording reservation list according to the thickness to allow the user to recognize the number of recording reserved programs for each date clearly.

When the user selects one of FIGS. 16(a), 16(b) and 16(c), the electronic device 100 form the detailed recording reservation list as shown in FIGS. 9 and 10, for example.

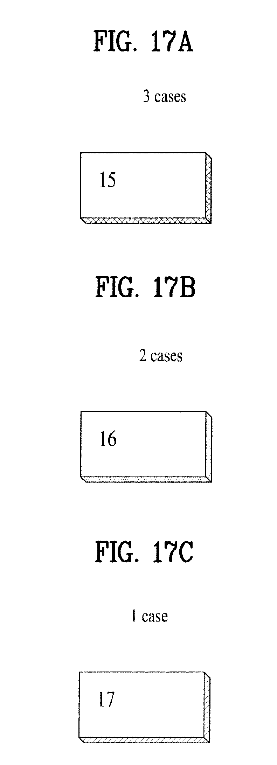

FIG. 17 is a diagram illustrating a recording reservation list according to a seventh embodiment.

FIG. 17 is a conversion type of FIGS. 15 and 16. According to FIG. 17, the number of programs on a recording reservation list is displayed distinguishably with a color, to allow the user to recognize the number of recording reserved programs for each date clearly.

That is, the electronic device 100 gives date cells of GUI providing the recording reservation list as colors, respectively, for example, red, green and blue according to the number of recording reserved programs for a corresponding date.

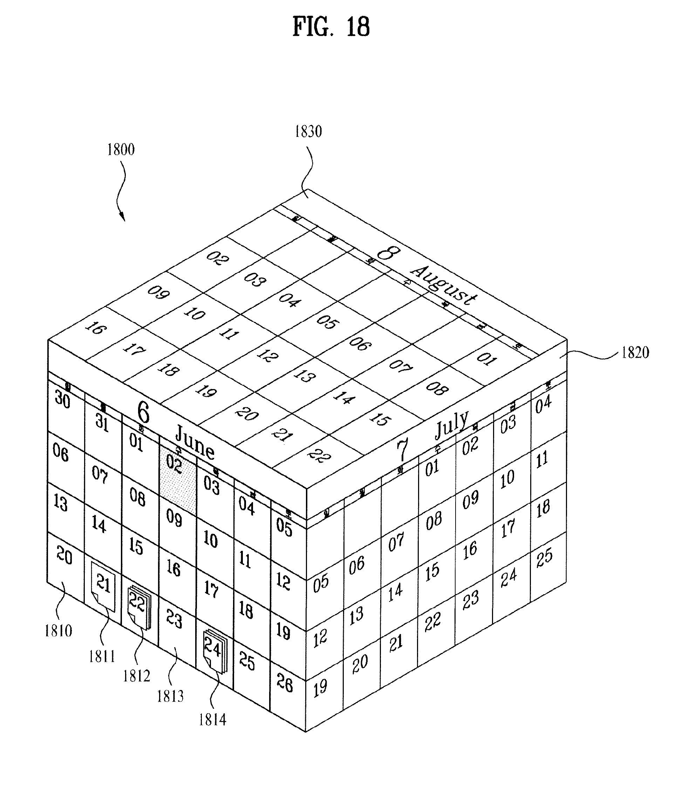

FIG. 18 is a diagram illustrating GUI provided by the electronic device according to a third embodiment.

In reference to FIG. 18, when sensing a user action requesting GUI for recording reservation, the electronic device 100 may display 3D GUI 1800. A calendar 1810, 1820 and 1830 is displayed on each face of the GUI 1800. Each calendar 1810, 1820 and 1830 provides a stereoscopic image indicating recording reservation information for a corresponding month. Here, the stereoscopic image may be displayed as one of the recording reservation lists shown in FIGS. 8, 11, 12, 13, 15, 16 and 17, and it may be displayed according to the method described in reference to FIGS. 8, 11, 12, 13, 15, 16 and 17.

For example, a stereoscopic image 1811 displayed on a date cell indicating a date of the 21^{st} is the texture 810 shown in FIG. 8 and the stereoscopic image 1811 indicates that there is a single recording reserved program for the date of the 21^{st}. A stereoscopic image 1812 displayed in a date cell indicating a date of the 22^{nd} and the stereoscopic image 1812 indicates that there are three recording reserved programs for the date of the 22^{nd}. A stereoscopic image 1814 displayed in a date cell indicating a date of the 24^{th} and the stereoscopic image 1814 indicates that there are three recording reserved programs for the date of 24^{th}. No stereoscopic image is provided on a date cell having no recording reserved program. Since there is no recording reserved program for the date of the 23^{rd} in FIG. 8, a date cell 1813 indicating the date of the 23^{rd} has no stereoscopic image to present no recording reserved program.

When sensing a user action configured to select the date cells 1811, 1812 and 1814, the electronic device 100 may display the detailed recording reservation list shown in FIGS. 9, 10 and 14.

The GUI 1800 shown in FIG. 18 may have the characteristics of the GUI shown in FIGS. 4 to 7. Detailed description of the GUI is identical to the description of FIGS. 4 to 7 and the detailed description will be omitted accordingly.

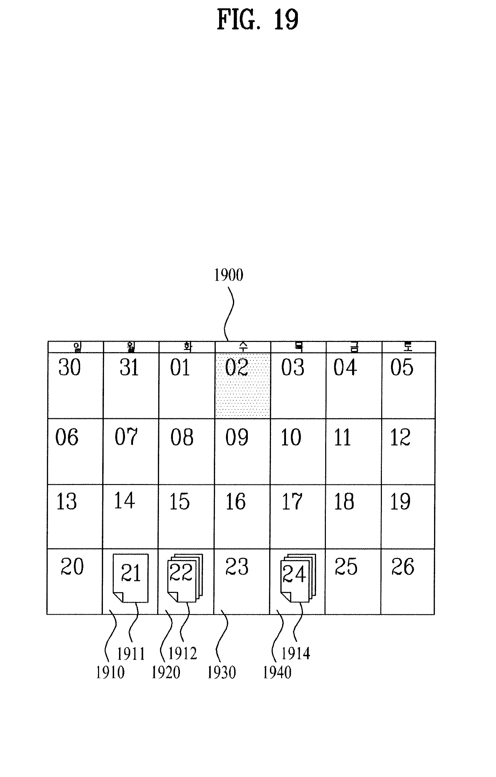

FIG. 19 is a diagram illustrating GUI provided by the electronic device according to a second embodiment.

In reference to FIG. 19, when sensing a user action configured to request GUI for recording reservation, the electronic device 100 may display GUI 1900. The GUI 1900 displays a 2D calendar and the calendar 1900 provides a stereoscopic image indicating recording reservation information of a corresponding month. Here, the stereoscopic image may be displayed as one of recording reservation lists shown in FIGS. 8, 11, 12, 13, 15, 16 and 17 and it may be displayed according to the methods described in reference to FIGS. 8, 11, 12, 13, 15, 16 and 17.

For example, a stereoscopic image 1911 displayed on a date cell 1910 indicating a date of the 21^{st} is the texture 810 shown in FIG. 8 and the stereoscopic image 1911 indicates a single recording reserved program for the date of the 21^{st}. A stereoscopic image 1912 displayed on a date cell 1920 indicating a date of the 22^{nd} is the textures 821, 822 and 823 shown in FIG. 8 and the stereoscopic image 1912 indicates that there are three recording reserved programs for the date of the 22^{nd}. A stereoscopic image 1914 displayed on a date cell 1940 indicating a date of the 24^{th} is the textures 830 shown in FIG. 8 and the stereoscopic image 1914 indicates that there are three recording reserved programs for the date of the 24^{th}. No stereoscopic image is provided on a date cell having no recording reserved program. Since there is no recording reserved program for the date of the 23^{rd} in FIG. 8, a date cell 1930 indicating the date of the 23^{rd} has no stereoscopic image to present no recording reserved program.

When sensing a user action configured to select the date cells 1910, 1920 and 1940, the electronic device 100 may display the detailed recording reservation list shown in FIGS. 9, 10 and 14.

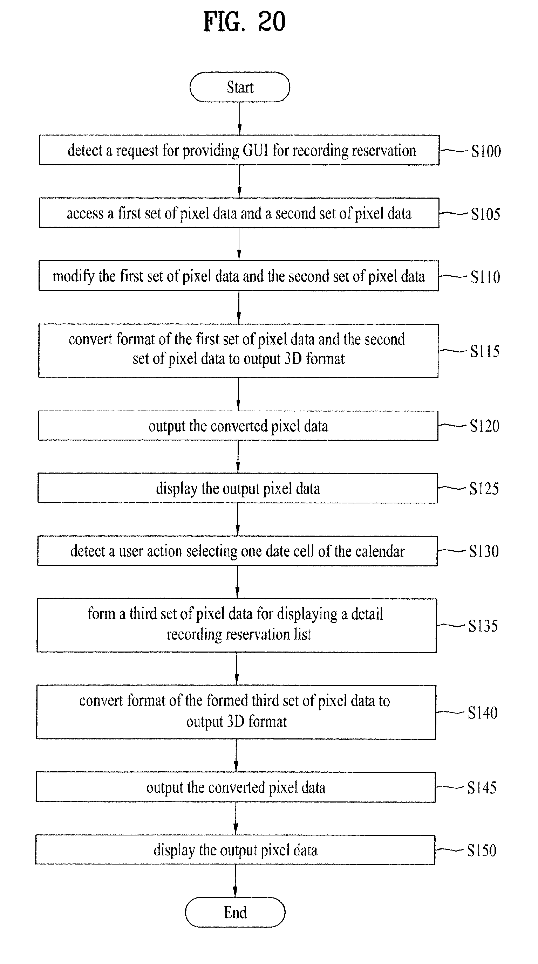

FIG. 20 is a diagram illustrating a process of a method for providing the GUI according to the present invention.

In reference to FIG. 20, the controller 115 detects a request for providing a Graphical User Interface (GUI) for recording reservation (S100).

The controller 115 accesses from the storage 108 a first set of pixel data and a second set of pixel data in response to detecting the request (S105). Herein the first set of pixel data and the second set of pixel data may display the GUI including a calendar. At least one date cell of the calendar may include a stereoscopic image indicating recording reservation information. For example, the GUI may be GUI 1800 shown in FIG. 18 or GUI 1900 shown in FIG 19.

The controller 115 modifies the accessed first set of pixel data and the accessed second set of pixel data according at least one of the size information, the depth information, the location information, the broadcast guide information and the recording reservation information (S 110).

The formatter 119 converts format of the first set of pixel data and the second set of pixel data to output 3D format (S115). The formatter 119 may receive the first set of pixel data and the second set of pixel data from the mixer 118 (S115).

The mixer 118 may mix a left-view image pixel data with the first set of pixel data and a right-view image pixel data with the second set of pixel data and the mixer 118 may send the mixed left-view image pixel data and the mixed right-view image pixel data to the formatter 119. Then, the formatter 119 may convert format of the mixed left-view image pixel data and the mixed right-view image pixel data to output 3D format in the step of S115. Herein, the left-view image pixel data and the right-view image pixel data may be video data of broadcast program or video data of contents.

The formatter 119 outputs the converted pixel data (S 120).

The display 120 displays the output pixel data (S125). Herein, the display 120 may display GUI shown in FIGS. 4 to 7, GUI 1800 shown in FIG. 18 or GUI 1900 shown in FIG 19

The controller 115 detects a user action selecting one date cell of the calendar (S 130).

The controller 115 forms a third set of pixel data for displaying a detail recording reservation list associated with the selected date cell in response to detecting the user action. Herein the detail recording reservation list may be the detail recording reservation list shown in FIG. 9, in Fig. 10 or Fig. 14. Also, the third set of pixel data may include data for a left-view image and data for a right-view image.

The formatter 119 converts format of the formed third set of pixel data to output 3D format (S140).

The formatter 119 outputs the convert pixel data (S 145).

The display 120 displays the output pixel data (S150). Herein, the display 120 may display the detail recording reservation list shown in FIG. 9, in Fig. 10 or Fig. 14.

Alternatively, the application controller 105 may perform a function of the controller 115 in at least one step of S100, S105, S110, S130 and S135.

The embodiments described above presents the recording reservation list to make the present understood and explained. Rather than the recording reservation list, a variety of information including a recorded program list and a user's memo may be provided independently or combinedly based on the method described above.

According to the present invention, the 3D GUI may be configured based on a user's view. As a result, using interest and purchase motivation may be inspired and purchase induction may be caused.

The present invention may be embodied as code readable by a computer in a recording medium readable by a computer. The recording medium includes all kinds of recording devices capable of store data readable by a computer device. For example, the recording medium readable by the computer may be a ROM, RAM, CD-ROM, magnetic tape, floppy disk, optical data storing device, and it may be embodied as a carrier wave type (for example, transmission via internet). The recording medium readable by the computer may be distributed in a computer unit connected via a network and a code readable by the computer in distribution may be stored in the recording medium to be implemented.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A method for providing a Graphical User Interface (GUI), comprising:
detecting a request for providing a Graphical User Interface (GUI) for recording reservation;
accessing from a storage a first set of pixel data and a second set of pixel data in response to detecting the request, wherein the first set of pixel data and the second set of pixel data display the GUI including a calendar, wherein at least one date cell of the calendar includes a stereoscopic image indicating recording reservation information; and
converting format of the first set of pixel data and the second set of pixel data to output 3D format.

2. The method of the claim 1, wherein the GUI is displayed as a stereoscopic image including the calendar on at least one face of a polyhedron.

3. The method of the claim 1, wherein the stereoscopic image is differently displayed according to the recording reservation.

4. The method of the claim 1, wherein the stereoscopic image includes one or more layer according to the reservation information, each layer being associated with one program.

5. The method of the claim 1, further comprising:
detecting a user action selecting one date cell of the calendar; and
forming a third set of pixel data for displaying a detail recording reservation list associated with the selected date cell in response to detecting the user action.

6. The method of the claim 5, the detail recording reservation list includes at least one of title, time information or thumb nail.

7. The method of the claim 1, further comprising modifying the accessed first set of pixel data and the accessed second set of pixel data according at least one of size information, depth information or location information.

8. An electronic device comprising:
a storage configured to store a first set of pixel data and a second set of pixel data;
a controller configured to detect a request for providing a Graphical User Interface (GUI) for recording reservation and access the first set of pixel data and the second set of pixel data in response to detecting the request, wherein the first set of pixel data and the second set of pixel data display the GUI including a calendar, wherein at least one date cell of the calendar includes a stereoscopic image indicating recording reservation information; and
a formatter configured to convert format of the first set of pixel data and the second set of pixel data to output 3D format.

9. The electronic device of the claim 8, wherein the controller modifies the accessed first set of pixel data and the accessed second set of pixel data according at least one of size information, depth information or location information.

10. The electronic device of the claim 8, wherein the GUI is displayed as a stereoscopic image including the calendar on at least one face of a polyhedron.

11. The electronic device of the claim 8, wherein the stereoscopic image is differently displayed according to the recording reservation.

12. The electronic device of the claim 8, wherein color of date cells of the calendar is differently displayed according to the recording reservation.

13. The electronic device of the claim 8, wherein the stereoscopic image includes one or more layer according to the reservation information, each layer being associated with one program.

14. The electronic device of the claim 8, wherein the controller detects a user action selecting one date cell of the calendar and forms a third set of pixel data for displaying a detail recording reservation list associated with the selected date cell in response to detecting the user action.

15. The electronic device of the claim 14, the detail recording reservation list includes at least one of title, time information or thumb nail.
